(19) Europäisches Patentamt
European Patent Office
Office européen des brevets

(11) **EP 3 146 424 B1**

(12) **FASCICULE DE BREVET EUROPEEN**

(45) Date de publication et mention de la délivrance du brevet:
**19.12.2018 Bulletin 2018/51**

(21) Numéro de dépôt: **15725808.8**

(22) Date de dépôt: **27.04.2015**

(51) Int Cl.:
*G06F 9/30* *(2018.01)*  *G06F 9/38* *(2018.01)*

(86) Numéro de dépôt international:
**PCT/FR2015/051134**

(87) Numéro de publication internationale:
**WO 2015/177427 (26.11.2015 Gazette 2015/47)**

(54) **STRUCTURE DE PAQUET D'INSTRUCTIONS DE TYPE VLIW ET PROCESSEUR ADAPTE POUR TRAITER UN TEL PAQUET D'INSTRUCTIONS**

VLIW-ANWEISUNGSPAKETAUFBAU UND PROZESSOR ZUR VERARBEITUNG SOLCH EINES ANWEISUNGSPAKETS

VLIW TYPE INSTRUCTION PACKET STRUCTURE AND PROCESSOR SUITABLE FOR PROCESSING SUCH AN INSTRUCTION PACKET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.05.2014 FR 1454638**

(43) Date de publication de la demande:
**29.03.2017 Bulletin 2017/13**

(73) Titulaire: **Kalray**
**91400 Orsay (FR)**

(72) Inventeurs:
• **AYRIGNAC, Renaud**
**91400 Orsay (FR)**
• **RAY, Vincent**
**91400 Orsay (FR)**
• **DUPONT DE DINECHIN, Benoît**
**38000 Grenoble (FR)**

(74) Mandataire: **de Roquemaurel, Bruno et al**
**Omnipat**
**24 place des Martyrs de la Résistance**
**13100 Aix en Provence (FR)**

(56) Documents cités:
**WO-A2-2004/017197  DE-A1- 10 301 323**
**US-B1- 6 324 639**

## Description

La présente invention concerne les processeurs à paquet d'instructions (instruction bundle) très long VLIW (Very Long Instruction Word), et plus particulièrement les processeurs à paquet d'instructions de longueur variable.

De tels processeurs comprennent une unité centrale rassemblant plusieurs unités de traitement pour exécuter plusieurs instructions en parallèle. Les paquets d'instructions de type VLIW peuvent rassembler plusieurs instructions élémentaires destinées aux différentes unités de traitement de l'unité centrale. Ainsi un paquet d'instructions pour un tel processeur peut atteindre 64 à 128 bits, voire 256 bits et plus.

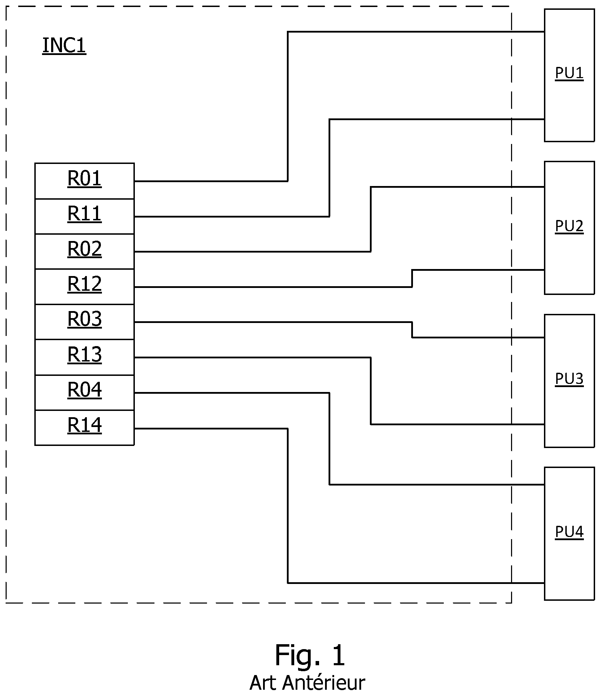

Dans certains processeurs de type VLIW, la distribution des instructions élémentaires d'un paquet d'instructions aux unités de traitement du processeur est toujours effectuée dans le même ordre. La figure 1 représente un circuit d'entrée INC1 d'unités de traitement PU1, PU2, PU3, PU4 d'un tel processeur. Le circuit INC1 comprend des registres R01-R04 et R11-R14 prévus pour recevoir des instructions élémentaires de paquet d'instructions. Les registres Rj0, Rj1 sont connectés à l'unité de traitement PUj, j étant égal à 1, 2, 3 et 4. Les paquets d'instructions VLIW sont alors divisés en voies (lanes), chaque voie étant affectée à une unité de traitement PUj. Le compilateur est alors configuré pour n'affecter à une voie particulière de chaque paquet d'instructions qu'il génère, que des instructions élémentaires susceptibles d'être traitées par l'unité de traitement correspondant à la voie. Les paquets d'instructions générés par le compilateur présentent alors systématiquement la structure suivante : P1-P2-P3-P4, Pj étant une instruction élémentaire exécutable exclusivement par l'unité de traitement PUj (avec j = 1, 2, 3, ou 4). Si le programme à exécuter par le processeur comporte plusieurs instructions élémentaires rapprochées sollicitant une même unité de traitement, il est nécessaire de répartir ces instructions élémentaires dans des paquets d'instructions VLIW différents. Si les autres voies de ces paquets ne peuvent pas recevoir d'autres instructions élémentaires sollicitant les autres unités de traitements, ces voies doivent recevoir des instructions élémentaires NOP ne déclenchant aucun traitement (NOP). Par ailleurs, dans le cas d'instructions élémentaires de taille variable, le compilateur doit compléter les voies recevant des instructions élémentaires n'ayant pas la taille maximale par une ou plusieurs instructions élémentaires ne déclenchant aucun traitement (NOP). On appelle "syllabe" un mot de taille fixe qui compose une instruction élémentaire de taille variable. Dans l'exemple de la figure 1, les instructions élémentaires comprennent une ou deux syllabes de même taille. Ainsi les registres R01-R04 sont prévus pour recevoir la première syllabe des instructions élémentaires d'un paquet d'instructions, et les registres R11-R14, la seconde syllabe éventuelle des instructions élémentaires. Pour chaque instruction élémentaire ne comportant pas de seconde syllabe, le registre R1j correspondant au registre R0j recevant la première syllabe de l'instruction élémentaire, doit recevoir une instruction NOP à syllabe unique.

Il en résulte qu'une partie substantielle de la mémoire contenant le programme, peut être occupée par des instructions NOP. Il en résulte également qu'une partie substantielle du flux des données transmises par le bus de programme du processeur contient de tels paquets d'instructions. Ces inconvénients entrainent une mauvaise utilisation des ressources de traitement du processeur, ainsi qu'une surconsommation électrique. Il en résulte également qu'une partie non négligeable de la mémoire programme est occupée inutilement par des instructions NOP.

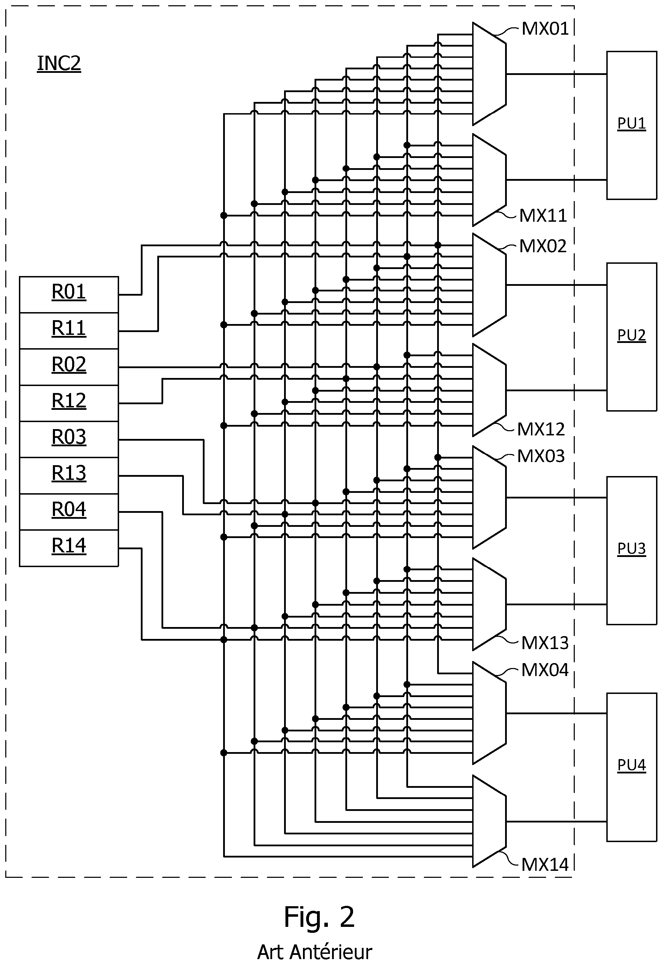

Certains processeurs sont conçus pour ne pas imposer d'affectation d'instructions de paquets VLIW à des unités de traitement. De cette manière, il n'est pas nécessaire d'insérer des instructions NOP dans les paquets d'instructions. A cet effet, chaque entrée d'instruction de chaque unité de traitement du processeur comprend un multiplexeur dont les entrées sont reliées à des registres d'entrée recevant les instructions élémentaires du paquet VLIW. La figure 2 représente un circuit d'entrée INC2 des unités de traitement PU1-PU4, dans le cas où les instructions élémentaires se trouvant dans les paquets d'instructions VLIW comportent au plus deux syllabes. Le circuit d'entrée INC2 comprend les registres R01-R04 et R11-R14, et deux multiplexeurs MX01-MX04 et M11-MX14 par unité de traitement PU1-PU4. Les paquets VLIW générés par le compilateur d'un tel processeur comprennent au plus quatre instructions élémentaires comportant chacune une ou deux syllabes de mêmes tailles. Chaque premier multiplexeur MX01-04 fournit la première syllabe d'une instruction élémentaire à une unité de traitement PU1-PU4 à laquelle il est connecté, et chaque second multiplexeur MX11-MX14 fournit la seconde syllabe d'une instruction élémentaire à l'unité de traitement PU1-PU4 à laquelle il est connecté. En partant du principe que le registre R01 ne peut pas recevoir une seconde syllabe d'instruction élémentaire, il n'est connecté qu'aux premiers multiplexeurs MX01-MX04. Par conséquent, chaque premier multiplexeur MX01-MX04 comporte huit entrées, et chaque second multiplexeur MX11-MX14 comporte 7 entrées, pour quatre unités de traitement PU1-PU4. Les multiplexeurs MX01-MX04 et MX11-MX14 doivent donc être commandés par des mots de commande de trois bits. Il en résulte un circuit d'interconnexion entre les registres R01-R04 et R11-R14 et les multiplexeurs MX01-MX04 et M11-MX14, et un circuit de commande des multiplexeurs présentant une complexité relativement élevée (60 entrées de multiplexeurs). En outre, le temps de propagation d'un signal dans un multiplexeur augmente en fonction du nombre d'entrées du multiplexeur. La présence des multiplexeurs MX01 à MX04 en particulier, peut nécessiter de retarder le traitement du paquet d'instructions d'un cycle d'horloge.

Il est possible réduire d'une manière importante le nombre d'entrées des multiplexeurs, en ordonnant les instructions élémentaires dans le paquet d'instructions VLIW en fonction d'un ordre attribué aux unités de traitement et en complétant les instructions élémentaires plus courtes (ne comportant pas le nombre maximum de syllabes) par des instructions NOP de manière à ce que toutes les instructions élémentaires du paquet d'instructions, éventuellement complétées, aient une même longueur, c'est-à-dire un même nombre de syllabes.

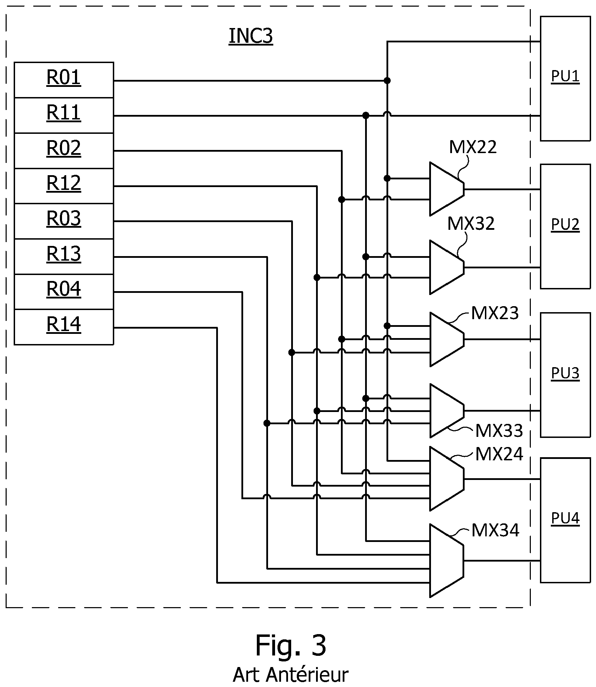

Ainsi, la figure 3 représente un circuit d'entrée INC3 des unités de traitement PU1-PU4. Le circuit d'entrée INC3 comprend les registres R01-R04 et R11-R14, et des multiplexeurs MX22-MX24 et MX32-MX34. Les registres R01 et R11 sont reliés directement aux première et seconde entrées de l'unité de traitement PU1. Le multiplexeur MX22 est connecté en entrée aux registres R02 et R02, et en sortie, à la première entrée de l'unité de traitement PU2. Le multiplexeur MX32 est connecté en entrée aux registres R11 et R12, et en sortie, à la seconde entrée de l'unité de traitement PU2. Le multiplexeur MX23 est connecté en entrée aux registres R01, R02 et R03, et en sortie, à la première entrée de l'unité de traitement PU3. Le multiplexeur MX33 est connecté en entrée aux registres R11, R12 et R13, et en sortie, à la seconde entrée de l'unité de traitement PU3. Le multiplexeur MX24 est connecté en entrée aux registres R01-R04 et en sortie, à la première entrée de l'unité de traitement PU4. Le multiplexeur MX34 est connecté en entrée aux registres R11-R14, et en sortie, à la seconde entrée de l'unité de traitement PU4. Cette solution permet de limiter à 18 entrées le nombre d'entrées des multiplexeurs MX22-MX24, MX32-MX34. En revanche, cette solution ne contribue que partiellement à améliorer l'utilisation des ressources du processeur et l'utilisation de la mémoire programme, puisque des instructions NOP doivent être ajoutées dans le paquet d'instructions aux instructions élémentaires ne comportant pas le nombre maximum de syllabes.

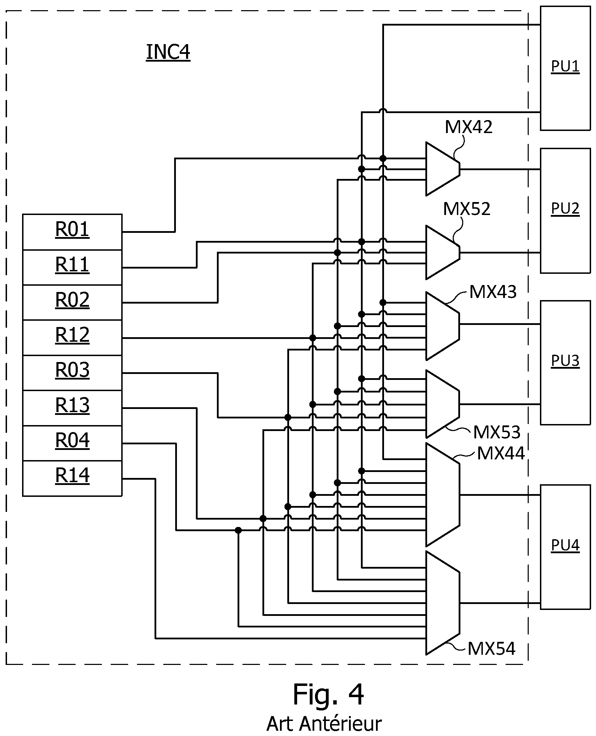

La nécessité d'insérer des instructions NOP dans les paquets d'instructions VLIW peut être évitée en conservant un ordre d'instructions élémentaires dans le paquet d'instructions, correspondant à l'ordre attribué aux unités de traitement. Ainsi, la figure 4 représente un circuit d'entrée INC4 des unités de traitement PU1-PU4. Le circuit d'entrée INC4 comprend les registres R01-R04 et R11-R14, et des multiplexeurs MX42-MX44 et MX52-MX54. Les registres R01 et R11 sont reliés directement aux première et seconde entrées de l'unité de traitement PU1. Le multiplexeur MX42 est connecté en entrée aux registres R02, R11 et R02, et en sortie, à la première entrée de l'unité de traitement PU2. Le multiplexeur MX52 est connecté en entrée aux registres R11, R02 et R12, et en sortie, à la seconde entrée de l'unité de traitement PU2. Le multiplexeur MX43 est connecté en entrée aux registres R01, R11, R02, R12 et R03, et en sortie, à la première entrée de l'unité de traitement PU3. Le multiplexeur MX53 est connecté en entrée aux registres R11, R02, R12, R03 et R13, et en sortie, à la seconde entrée de l'unité de traitement PU3. Le multiplexeur MX44 est connecté en entrée aux registres R01-R04 et R11-R13, et en sortie, à la première entrée de l'unité de traitement PU4. Le multiplexeur MX54 est connecté en entrée aux registres R02-R04 et R11-R14, et en sortie, à la seconde entrée de l'unité de traitement PU4. Cette solution permet de limiter à 30 entrées le nombre d'entrées des multiplexeurs MX42-MX44, MX52-MX54, sans avoir à insérer d'instructions NOP dans les paquets d'instructions VLIW. Cependant, cette solution nécessite également des multiplexeurs à nombre d'entrées élevé. En particulier, le multiplexeur MX44 peut nécessiter de retarder le traitement des paquets d'instructions d'un cycle d'horloge.

La demande de brevet DE 103 01 323 décrit une architecture de processeur comprenant plusieurs unités de traitement pour exécuter en parallèle des paquets d'instructions de type VLIW. Cette architecture nécessite également plusieurs multiplexeurs à grand nombre d'entrées.

Il est souhaitable de simplifier le circuit d'entrée des unités de traitement d'un processeur de type VLIW sans pénaliser l'utilisation des ressources de traitement du processeur et l'utilisation de la mémoire programme, et sans augmenter la consommation électrique. Il est également souhaitable d'améliorer l'efficacité de ce circuit d'entrée pour transmettre les instructions élémentaires d'un paquet d'instructions aux différentes unités de traitement.

Des modes de réalisation concernent un procédé de compilation d'un programme pour un processeur à plusieurs unités de traitement, capable d'exécuter des paquets d'instructions à plusieurs instructions élémentaires, le procédé comprenant une étape de rassemblement dans un paquet d'instructions, de plusieurs instructions élémentaires destinées chacune à une unité de traitement respective du processeur, chaque instruction élémentaire comprenant une ou plusieurs syllabes ayant chacune un rang dans l'instruction élémentaire. Selon l'invention, le procédé comprend une étape de répartition des syllabes des instructions élémentaires dans le paquet d'instructions par groupes de syllabes de même rang, un groupe de syllabe de premier rang de toutes les instructions élémentaires du paquet d'instructions étant inséré dans le paquet d'instructions, avant un groupe de syllabe de second rang de toutes les instructions élémentaires du paquet d'instructions, les syllabes dans chaque groupe étant ordonnées en fonction de l'unité de traitement à laquelle chaque syllabe est destinée.

Selon un mode de réalisation, les syllabes de même rang sont ordonnées dans le paquet d'instructions de manière à ce qu'une des unités de traitement la plus prioritaire puisse recevoir en premier la syllabe d'instruction élémentaire qui lui est destinée.

Selon un mode de réalisation, chaque syllabe de chaque paquet d'instructions comprend un code de fin indiquant si la syllabe est la dernière du paquet d'instructions.

Selon un mode de réalisation, chaque syllabe de chaque paquet d'instructions comprend un code d'unité de traitement indiquant l'unité de traitement à laquelle la syllabe doit être transmise.

Selon un mode de réalisation, chaque syllabe de chaque paquet d'instructions comprend un code indiquant le rang de la syllabe.

Selon un mode de réalisation, chaque paquet d'instructions comprend au maximum moins de syllabes que le nombre d'unités de traitement fois le nombre maximum de syllabes par instruction élémentaire.

Selon un mode de réalisation, les syllabes de toutes les instructions élémentaires présentent une même longueur.

Des modes de réalisation concernent également un processeur comprenant : plusieurs unités de traitement pour traiter plusieurs instructions élémentaires en parallèle, les instructions élémentaires comprenant une ou plusieurs syllabes ayant chacune un rang dans l'instruction élémentaire, et un circuit d'entrée configuré pour recevoir un paquet d'instructions comprenant plusieurs instructions élémentaires, et pour le transmettre aux unités de traitement. Selon l'invention, le circuit d'entrée est configuré pour transmettre aux unités de traitement toutes les syllabes de premier rang des instructions élémentaires du paquet d'instructions plus rapidement que des syllabes de second rang des instructions élémentaires du paquet d'instructions, les syllabes de même rang étant ordonnées entre elles en fonction de l'unité de traitement à laquelle chaque syllabe est destinée.

Selon un mode de réalisation, les syllabes du paquet d'instructions sont regroupées par groupe de syllabes de même rang, le groupe de syllabes de premier rang étant rangé au début du paquet d'instructions, les syllabes dans chaque groupe étant ordonnées selon un ordre attribué aux unités de traitement.

Selon un mode de réalisation, le circuit d'entrée est configuré pour transmettre aux unités de traitement les syllabes de chaque groupe du paquet d'instructions, en respectant un ordre attribué aux unités de traitement.

Selon un mode de réalisation, le circuit d'entrée comprend des registres prévus pour recevoir chacun une syllabe respective du paquet d'instructions, le nombre de registres étant au plus égal au nombre d'unités de traitement du processeur fois un nombre maximum de syllabes par instruction élémentaire.

Selon un mode de réalisation, le nombre de registres est inférieur au nombre d'unités de traitement du processeur fois un nombre maximum de syllabes par instruction élémentaire.

Selon un mode de réalisation, chaque syllabe de chaque paquet d'instructions comprend un code de fin indiquant si la syllabe est la dernière du paquet d'instructions.

Selon un mode de réalisation, chaque syllabe de chaque paquet d'instructions comprend un code d'unité de traitement indiquant l'unité de traitement à laquelle la syllabe doit être transmise.

Selon un mode de réalisation, chaque syllabe de chaque paquet d'instructions comprend un code indiquant le rang de la syllabe.

Des exemples de réalisation de l'invention seront décrits dans ce qui suit, à titre non limitatif en relation avec les figures jointes parmi lesquelles :

les figures 1 à 4 décrites précédemment représentent schématiquement des unités de traitement d'un processeur de type VLIW, et leur circuit d'entrée, selon différentes solutions de l'art antérieur

la figure 5 représente schématiquement des unités de traitement d'un processeur de type VLIW, et leur circuit d'entrée, selon un mode de réalisation,

la figure 6 représente schématiquement un paquet d'instructions, selon un mode de réalisation,

les figures 7 et 8 représentent des structures d'instruction élémentaire, selon un mode de réalisation,

la figure 9 représente schématiquement des unités de traitement d'un processeur de type VLIW, et leur circuit d'entrée, selon un autre mode de réalisation.

Selon un mode de réalisation, des paquets d'instructions VLIW comportant chacun une ou plusieurs instructions élémentaires formées chacune d'une ou plusieurs syllabes sont produits par un compilateur en ordonnant les instructions élémentaires dans le paquet d'instructions VLIW en commençant par les premières syllabes de chaque instruction élémentaire. Ainsi chaque paquet d'instructions VLIW comprend la syllabe de premier rang de toutes les instructions élémentaires du paquet, suivies des éventuelles syllabes de second rang, et ainsi de suite. Les syllabes de chaque rang sont ordonnées en fonction d'un ordre attribué aux unités de traitement. Ainsi, seul l'ordre des syllabes est imposé au sein d'un paquet d'instructions VLIW, mais pas la position stricte de celles-ci dans le paquet.

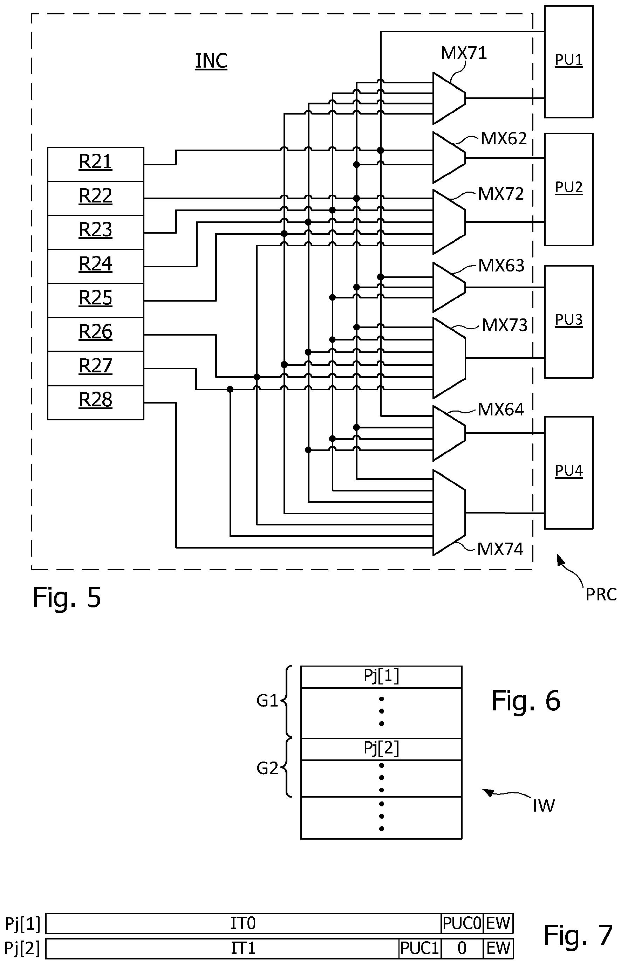

La figure 5 représente des unités de traitement PU1-PU4 d'un processeur PRC, et un circuit d'entrée INC des unités de traitement PU1-PU4, adapté à traiter de tels paquets d'instructions. Le circuit d'entrée INC comprend des registres d'instruction R21 à R28, et des multiplexeurs MX62-MX64 et MX71-MX74 reliant les registres d'entrée aux unités de traitement. Les registres R21-R28 reçoivent chacun une syllabe respective des instructions élémentaires d'un paquet d'instructions VLIW. La figure 5 illustre le cas d'un processeur à quatre unités de traitement, et donc susceptible de traiter des paquets d'instructions VLIW à au plus quatre instructions élémentaires.

Le registre R01 est relié directement à la première entrée de l'unité de traitement PU1. Le multiplexeur MX71 est connecté en entrée aux registres R22-R25, et en sortie, à la seconde entrée de l'unité de traitement PU1. Le multiplexeur MX62 est connecté en entrée aux registres R21 et R22, et en sortie, à la première entrée de l'unité de traitement PU2. Le multiplexeur MX72 est connecté en entrée aux registres R22-R26, et en sortie, à la seconde entrée de l'unité de traitement PU2. Le multiplexeur MX63 est connecté en entrée aux registres R21-R23, et en sortie, à la première entrée de l'unité de traitement PU3. Le multiplexeur MX73 est connecté en entrée aux registres R22-R27, et en sortie, à la seconde entrée de l'unité de traitement PU3. Le multiplexeur MX64 est connecté en entrée aux registres R21-R24, et en sortie, à la première entrée de l'unité de traitement PU4. Le multiplexeur MX74 est connecté en entrée aux registres R22-R28, et en sortie, à la seconde entrée de l'unité de traitement PU4.

Le nombre d'entrées des multiplexeurs MX62-MX64, MX71-MX74 est ainsi limité à 32, et il n'est pas nécessaire d'insérer des instructions NOP dans les paquets d'instructions VLIW. En outre, les multiplexeurs MX62-MX64 recevant les premières syllabes des paquets d'instructions comportent un nombre d'entrées réduit, et l'entrée de première syllabe de l'unité de traitement PU1 est directement reliée au registre R01. Il en résulte que les unités de traitement PU1-PU4 reçoivent les premières syllabes avant les secondes syllabes. Comme les secondes syllabes ne sont pas nécessaires pour le décodage des premières syllabes, le circuit d'entrée INC présente l'avantage de permettre d'activer le traitement des instructions élémentaires du paquet d'instruction, et donc d'activer toutes les unités de traitement PU1-PU4 concernées, avant que soient transmises aux unités de traitement, les éventuelles syllabes suivantes des instructions élémentaires, qui peuvent être présentes dans les registres R22-R28.

La figure 6 représente un paquet d'instructions IW. Selon un mode de réalisation, le paquet d'instructions comprend un groupe G1 de syllabes de premier rang Pj[1] d'instructions élémentaires Pj, éventuellement un groupe G2 de syllabes de second rang Pj[2] des instructions élémentaires Pj, et éventuellement, un ou plusieurs groupes de syllabes de rangs inférieurs des instructions élémentaires Pj, dans le cas où ces dernières comprennent plus de 2 syllabes. Ici j correspond à un numéro d'unité de traitement du processeur et peut être égal à 1, 2, 3 ou 4 dans l'exemple de la figure 5. Les paquets d'instructions IW peuvent ainsi présenter les contenus respectivement minimum et maximum suivants :

minimum : Pj[1] avec j = 1, 2, 3 ou 4

maximum : P1 [1]-P2[1]-P3[1]-P4[1]-P1[2]-P2[2]-P3[2]-P4[2] dans lesquels Pj[1] représente la première syllabe (ou syllabe de rang 1) d'une instruction élémentaire Pj exécutable par l'unité de traitement PUj (j étant égal à 1, 2, 3 ou 4), et Pj[2] représente une seconde syllabe (ou syllabe de rang 2) de l'instruction élémentaire Pj. Tous les contenus possibles d'un paquet d'instructions peuvent être obtenus en retirant une ou plusieurs syllabes du contenu maximum, en conservant l'ordre des syllabes du contenu maximum, étant entendu qu'un paquet d'instructions ne peut pas comporter une seconde syllabe Pj[2] sans la première syllabe correspondante Pj[1].

Les contenus possibles des registres R21-R28 sont indiqués dans le tableau 1 suivant :

Tableau 1

| | | | | | | | |
|---|---|---|---|---|---|---|---|
| R21 | P1[1] | P2[1] | P3[1] | P4[1] | | | |
| R22 | | P2[1] | P3[1] | P4[1] | P1[2] | P2[2] | P3[2] | P4[2] |
| R23 | | | P3[1] | P4[1] | P1[2] | P2[2] | P3[2] | P4[2] |
| R24 | | | | P4[1] | P1[2] | P2[2] | P3[2] | P4[2] |
| R25 | | | | | P1[2] | P2[2] | P3[2] | P4[2] |
| R26 | | | | | | P2[2] | P3[2] | P4[2] |
| R27 | | | | | | | P3[2] | P4[2] |
| R28 | | | | | | | | P4[2] |
| MUX | - | MX62 | MX63 | MX64 | MX71 | MX72 | MX73 | MX74 |

La diagonale du haut à gauche vers le bas à droite du tableau 1 correspond au contenu maximum du paquet d'instructions IW. Chaque colonne du tableau 1 correspond à un multiplexeur MX62-MX64 et MX71-MX74 indiqué dans la dernière ligne MUX du tableau. Chaque colonne du tableau 1 définit par ses cases non vides les registres R21-R28 en entrée du multiplexeur MX62-MX64 et MX71-MX74 correspondant.

Selon un mode de réalisation, l'ordre attribué aux unités de traitement est défini en fonction de leur criticité en temps. Par exemple une unité de contrôle de branchement BCU peut être considérée comme la plus critique en temps car elle a besoin de connaitre le plus vite possible l'instruction à exécuter et les opérandes associés, afin de pouvoir exécuter le branchement rapidement et ainsi minimiser le temps nécessaire à l'exécution de l'opération de branchement.

Selon un mode de réalisation, chaque syllabe comprend un code d'unité de traitement spécifiant par quelle unité de traitement elle doit être traitée. La figure 7 représente des syllabes de premier et second rang Pj[1] Pj[2] d'une instruction élémentaire Pj. La syllabe Pj[1] comprend un champ d'instruction IT0, un champ de code d'unité de traitement PUCO, et un champ EW indiquant si la syllabe est la dernière du paquet d'instructions VLIW. Si le processeur comprend plusieurs unités de traitement assurant les mêmes opérations, il peut être prévu que le code d'unité de traitement PUC0 ne distingue pas ces unités de traitement afin de réduire la longueur de ce code.

La syllabe Pj[2] de l'instruction élémentaire Pj comprend un champ d'instructions IT1, le champ EW indiquant si la syllabe est la dernière du paquet d'instructions VLIW, le champ de code d'unité de traitement PUC0 fixé 0, et un champ de code d'unité de traitement PUC1 pour la seconde syllabe. Les champs de code d'unité de traitement PUCO, PUC1 peuvent être utilisés pour commander les multiplexeurs MX62-MX64 et MX71-MX74.

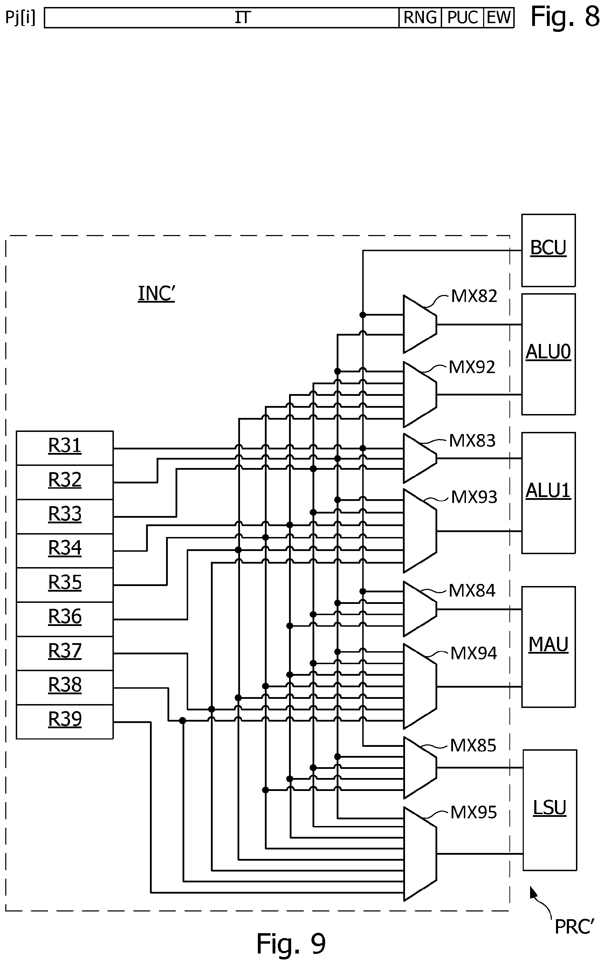

Bien entendu, d'autres champs peuvent être prévus dans les syllabes Pj[i]. Ainsi, la figure 8 représente une syllabe Pj[i] de rang i. La syllabe Pj[i] comprend un champ d'instruction IT, un champ de code d'unité de traitement PUC, le champ EW et un champ RNG indiquant le rang i de la syllabe (sur 1 bit si les instructions élémentaires comportent au plus deux syllabes).

Le transfert de toutes les instructions élémentaires des registres R21-R28 vers les unités de traitement PU1-PU4 est déclenché par l'écriture dans l'un des registres de la dernière syllabe d'un paquet d'instruction (présence d'un champ EW indiquant la dernière syllabe du paquet). L'instant d'arrivée d'une syllabe dans une unité de traitement dépend de la taille du multiplexeur MX62-MX64, MW71-MX74. Par conséquent, les unités PU1-PU4 peuvent recevoir en premier une première syllabe, dans l'ordre PU1, PU2, PU3, PU4. Comme les multiplexeurs MX71 et MX64 comportent un même nombre d'entrée, ils peuvent recevoir en même temps une syllabe du paquet d'instruction présent dans les registres R21-R28. Les unités de traitement PU2 à PU4 peuvent ensuite recevoir successivement une syllabe.

Selon un mode de réalisation, le processeur comprend une ou plusieurs unités de contrôle de branchement BCU (Branch Control Unit), une ou plusieurs unités arithmétiques et logiques ALU (Arithmetic and Logic Unit), une ou plusieurs unités d'accès à la mémoire LSU (Load and Store Unit) et une ou plusieurs unités de multiplication-addition en virgule fixe ou flottante MAU (Multiply and Accumulate Unit).

La figure 9 représente un exemple d'un processeur PRC' comprenant cinq unités de traitement, à savoir une unité BCU, deux unités ALU référencées ALU0 et ALU1, une unité MAU et une unité LSU. L'unité BCU ne traite que des instructions élémentaires à une syllabe, tandis que les autres unités de traitements ALU0, ALU1, MAU et LSU peuvent traiter des instructions élémentaires à une ou deux syllabes. Les unités de traitement peuvent être ordonnées dans l'ordre BCU, ALU, MAU et LSU. Les paquets d'instructions peuvent ainsi présenter au maximum le contenu à neuf syllabes suivant :

$$BC[1]\text{-}A0[1]\text{-}A1[1]\text{-}MA[1]\text{-}LS[1]\text{-}A0[2]\text{-}A1[2]\text{-}MA[2]\text{-}LS[2]$$

dans lequel BC[1], A0[1], A1[1], MA[1] et LS[1] sont des syllabes de premier rang d'instructions élémentaires destinées respectivement aux unités BCU, ALU0, ALU1, MAU et LSU, et A0[2], A1[2], MA[2] et LS[2] sont des syllabes de second rang destinées respectivement aux unités ALU0, ALU1, MAU et LSU.

La figure 9 représente un processeur PRC' comprenant les unités de traitement BCU, ALU0, ALU1, MAU et LSU et un circuit d'entrée INC'. Le circuit d'entrée INC' comprend des registres d'instructions R31 à R39, et des multiplexeurs MX82-MX85 et MX92-MX94 reliant les registres d'entrée aux unités de traitement. Les registres R31-R39 reçoivent chacun une syllabe respective des instructions élémentaires d'un paquet d'instructions IW. La figure 9 illustre ainsi le cas d'un processeur à cinq unités de traitement, susceptible de traiter des paquets d'instructions IW à au plus cinq instructions élémentaires d'une ou deux syllabes.

Les contenus possibles des registres R31 à R39 sont indiqués dans le tableau 2 suivant :

Tableau 2

| | | | | | | | | | |
|---|---|---|---|---|---|---|---|---|---|
| R31 | BC[1] | A0[1] | A1[1] | MA[1] | LS[1] | | | | |
| R32 | | A0[1] | A1[1] | MA[1] | LS[1] | A0[2] | A1[2] | MA[2] | LS[2] |
| R33 | | | A1[1] | MA[1] | LS[1 ]] | A0[2] | A1[2] | MA[2] | LS[2] |
| R34 | | | | MA[1] | LS[1] | A0[2] | A1[2] | MA[2] | LS[2] |
| R35 | | | | | LS[1 ]] | A0[2] | A1[2] | MA[2] | LS[2] |
| R36 | | | | | | A0[2] | A1[2] | MA[2] | LS[2] |
| R37 | | | | | | | A1[2] | MA[2] | LS[2] |
| R38 | | | | | | | | MA[2] | LS[2] |
| R39 | | | | | | | | | LS[2] |
| MUX | - | MX82 | MX83 | MX84 | MX85 | MX92 | MX93 | MX94 | MX95 |

Chaque colonne du tableau 2 définit par ses cases non vides les registres R31 à R39 en entrée d'un des multiplexeurs MX82-MX85 et MX92-MX95 indiqué dans la dernière ligne MUX du tableau.

Le registre R31 est relié directement à l'entrée unique de l'unité de traitement BCU. Le multiplexeur MX82 est connecté en entrée aux registres R31 et R32, et en sortie, à la première entrée de l'unité de traitement ALU0. Le multiplexeur MX92 est connecté en entrée aux registres R32-R36, et en sortie, à la seconde entrée de l'unité de traitement ALU0. Le multiplexeur MX83 est connecté en entrée aux registres R31-R33, et en sortie, à la première entrée de l'unité de traitement ALU1. Le multiplexeur MX93 est connecté en entrée aux registres R32-R37, et en sortie, à la seconde entrée de l'unité de traitement ALU1. Le multiplexeur MX84 est connecté en entrée aux registres R31-R34, et en sortie, à la première entrée de l'unité de traitement MAU. Le multiplexeur MX94 est connecté en entrée aux registres R32-R38, et en sortie, à la seconde entrée de l'unité de traitement MAU. Le multiplexeur MX85 est connecté en entrée aux registres R31-R35, et en sortie, à la première entrée de l'unité de traitement LSU. Le multiplexeur MX95 est connecté en entrée aux registres R32-R39, et en sortie, à la seconde entrée de l'unité de traitement LSU. Les multiplexeurs MX82-MX85 et MX92-MX95 comportent ainsi au total 40 entrées.

Comme l'entrée de l'unité BCU est directement connectée au registre R31, les instructions de branchement peuvent commencer à être traitées en premier. En raison du nombre d'entrées des multiplexeurs auxquels elles sont connectées, les unités de traitements ALU0, ALU1, MAU et LSU peuvent ensuite recevoir successivement une première syllabe. L'unité ALU0 peut recevoir une seconde syllabe en même temps que l'unité LSU peut recevoir une première syllabe. Les unités ALU1, MAU et LSU peuvent ensuite recevoir successivement une seconde syllabe.

Selon un mode de réalisation, le compilateur génère des paquets d'instructions IW ayant au maximum huit syllabes. Il en résulte que le registre R39 peut être supprimé et que le multiplexeur MX95 peut ne comporter que sept entrées au lieu de huit. Ainsi, le circuit d'entrée INC' peut ne comprendre que des multiplexeurs à au plus 3 bits de commande. Cette disposition permet également de réduire le temps de propagation d'une seconde syllabe vers l'unité de traitement LSU. Cette simplification du circuit d'entrée INC' s'avère peu gênante car la probabilité pour le compilateur de pouvoir générer un paquet d'instructions IW à neuf syllabes est faible.

Comme le processeur comprend deux unités de traitement identiques ALU0, ALU1, le champ PUC0 peut ne pas distinguer ces deux unités de traitement, de sorte que ce champ peut être codé avec seulement 2 bits pour quatre types d'unité de traitement. Si un paquet d'instructions comporte une instruction élémentaire pour l'une des unités ALU, celle-ci sera transmise à l'unité ALU0. L'unité ALU1 ne sera activée que si le paquet d'instructions IW comporte deux instructions élémentaires à traiter par une unité ALU. Comme l'unité BCU ne reçoit pas de seconde syllabe, seules les quatre unités de traitement ALU0, ALU1, MAU, LSU sont susceptibles de recevoir une seconde syllabe. Le champ PUC1 peut donc également comporter seulement 2 bits. Dans le cas où les syllabes comportent des champs PUC et RNG, seuls 4 bits sont également nécessaires pour encoder un numéro d'unité de traitement (3 bits pour cinq unités de traitement) et le rang de la syllabe (1 bit pour des instructions élémentaires d'une ou deux syllabes).

Il apparaîtra clairement à l'homme de l'art que la présente invention est susceptible de diverses variantes de réalisation et diverses applications. En particulier, l'invention n'est pas limitée à des paquets d'instructions dans lesquels les syllabes sont regroupées par rang et ordonnées suivant un ordre attribué aux unités de traitement. Il importe simplement que le transfert des syllabes aux unités de traitement soit effectué en commençant par les syllabes de premier rang. La disposition des syllabes de premier rang au début des paquets d'instructions permet simplement de transmettre aux unités de traitement, en premier les syllabes de premier rang se trouvant dans les registres d'entrée.

Par ailleurs, il n'est pas nécessaire que chaque syllabe de chaque paquet d'instructions comprenne un code de fin indiquant si la syllabe est la dernière du paquet d'instructions. En effet, il peut être prévu que chaque paquet d'instructions comprenne un champ par exemple d'entête ou de fin, spécifiant le nombre de syllabes du paquet d'instructions. Les champs PUC0, PUC1 spécifiant une unité de traitement à laquelle une syllabe doit être transmise et le rang RNG de chaque syllabe, ou bien un numéro d'entrée d'unité de traitement à laquelle la chaque syllabe doit être transmise, peuvent être également insérés dans un tel champ d'entête ou de fin de paquet d'instructions.

## Revendications

**1.** Procédé de compilation d'un programme pour un processeur à plusieurs unités de traitement, capable d'exécuter des paquets d'instructions à plusieurs instructions élémentaires (Pj), le procédé comprenant une étape de rassemblement dans un paquet d'instructions (IW), de plusieurs instructions élémentaires destinées chacune à une unité de traitement (PU1-PU4, BCU, ALU0, ALU1, MAU, LSU) respective du processeur (PRC, PRC'), chaque instruction élémentaire comprenant une ou plusieurs syllabes (Pj[1], Pj[2]) ayant chacune un rang dans l'instruction élémentaire, **caractérisé en ce qu'**il comprend une étape de répartition des syllabes des instructions élémentaires (Pj) dans le paquet d'instructions (IW) par groupes de syllabes de même rang, un groupe (G1) de syllabe de premier rang (Pj[1]) de toutes les instructions élémentaires du paquet d'instructions étant inséré dans le paquet d'instructions, avant un groupe (G2) de syllabe de second rang (Pj[2]) de toutes les instructions élémentaires du paquet d'instructions, les syllabes dans chaque groupe étant ordonnées en fonction de l'unité de traitement (PU1-PU4, BCU, ALU0, ALU1, MAU, LSU) à laquelle chaque syllabe est destinée.

2. Procédé selon la revendication 1, dans lequel les syllabes (Pj[1], Pj[2]) de même rang sont ordonnées dans le paquet d'instructions (IW) de manière à ce qu'une des unités de traitement (PU1-PU4, BCU, ALU0, ALU1, MAU, LSU) la plus prioritaire puisse recevoir en premier la syllabe d'instruction élémentaire qui lui est destinée.

3. Procédé selon la revendication 1 ou 2, dans lequel chaque syllabe (Pj[1], Pj[2]) de chaque paquet d'instructions (IW) comprend un code de fin (EW) indiquant si la syllabe est la dernière du paquet d'instructions.

4. Procédé selon l'une des revendications 1 à 3, dans lequel chaque syllabe (Pj[1], Pj[2]) de chaque paquet d'instructions (IW) comprend un code d'unité de traitement (PUC0, PUC1) indiquant l'unité de traitement (PU1-PU4, BCU, ALU0, ALU1, MAU, LSU) à laquelle la syllabe doit être transmise.

5. Procédé selon l'une des revendications 1 à 4, dans lequel chaque syllabe (Pj[1], Pj[2]) de chaque paquet d'instructions (IW) comprend un code (RNG) indiquant le rang de la syllabe.

6. Procédé selon l'une des revendications 1 à 5, dans lequel chaque paquet d'instructions (IW) comprend au maximum moins de syllabes (Pj[1], Pj[2]) que le nombre d'unités de traitement (PU1-PU4, BCU, ALU0, ALU1, MAU, LSU) fois le nombre maximum de syllabes par instruction élémentaire.

7. Procédé selon l'une des revendications 1 à 6, dans lequel les syllabes de toutes les instructions élémentaires présentent une même longueur.

8. Processeur comprenant :

plusieurs unités de traitement (PU1-PU4, BCU, ALU0, ALU1, MAU, LSU) pour traiter plusieurs instructions élémentaires en parallèle, les instructions élémentaires (Pj) comprenant une ou plusieurs syllabes (Pj[1], Pj[2]) ayant chacune un rang dans l'instruction élémentaire, et
un circuit d'entrée (INC, INC') configuré pour recevoir un paquet d'instructions (IW) comprenant plusieurs instructions élémentaires, et pour le transmettre aux unités de traitement,
**caractérisé en ce que** le circuit d'entrée est configuré pour transmettre aux unités de traitement (PU1-PU4, BCU, ALU0, ALU1, MAU, LSU) toutes les syllabes de premier rang (Pj[1]) des instructions élémentaires (Pj) du paquet d'instructions plus rapidement que des syllabes de second rang (Pj[2]) des instructions élémentaires du paquet d'instructions (IW), les syllabes de même rang étant ordonnées entre elles en fonction de l'unité de traitement à laquelle chaque syllabe est destinée.

9. Processeur selon la revendication 8, dans lequel les syllabes (Pj[1], Pj[2]) du paquet d'instructions (IW) sont regroupées par groupe de syllabes de même rang, le groupe de syllabes de premier rang (Pj[1]) étant rangé au début du paquet d'instructions (IW), les syllabes dans chaque groupe étant ordonnées selon un ordre attribué aux unités de traitement (PU1-PU4, BCU, ALU0, ALU1, MAU, LSU).

10. Processeur selon la revendication 8 ou 9, dans lequel le circuit d'entrée (INC, INC') est configuré pour transmettre aux unités de traitement (PU1-PU4, BCU, ALU0, ALU1, MAU, LSU) les syllabes (Pj[1], Pj[2]) de chaque groupe du paquet d'instructions (IW), en respectant un ordre attribué aux unités de traitement.

11. Processeur selon l'une des revendications 8 à 10, dans lequel le circuit d'entrée (INC, INC') comprend des registres (R21-R28, R31-R39) prévus pour recevoir chacun une syllabe (Pj[1], Pj[2]) respective du paquet d'instructions (IW), le nombre de registres étant au plus égal au nombre d'unités de traitement (PU1-PU4, BCU, ALU0, ALU1, MAU, LSU) du processeur (PRC, PRC') fois un nombre maximum de syllabes par instruction élémentaire (Pj).

12. Processeur selon l'une des revendications 8 à 11, dans lequel le nombre de registres (R31-R38) est inférieur au nombre d'unités de traitement (BCU, ALU0, ALU1, MAU, LSU) du processeur (PRC') fois un nombre maximum de syllabes par instruction élémentaire (Pj).

13. Processeur selon l'une des revendications 8 à 12, dans lequel chaque syllabe (Pj[1], Pj[2]) de chaque paquet d'instructions (IW) comprend un code de fin (EW) indiquant si la syllabe est la dernière du paquet d'instructions.

**14.** Processeur selon l'une des revendications 8 à 13, dans lequel chaque syllabe (Pj[1], Pj[2]) de chaque paquet d'instructions (IW) comprend un code d'unité de traitement (PUC0, PUC1) indiquant l'unité de traitement (PU1-PU4, BCU, ALU0, ALU1, MAU, LSU) à laquelle la syllabe doit être transmise.

**15.** Processeur selon l'une des revendications 8 à 14, dans lequel chaque syllabe (Pj[1], Pj[2]) de chaque paquet d'instructions (IW) comprend un code (RNG) indiquant le rang de la syllabe.

**Patentansprüche**

**1.** Kompilierungsverfahren eines Programms für einen Prozessor von mehreren Verarbeitungseinheiten, das geeignet ist, Pakete von mehreren Elementarbefehlen (Pj) auszuführen, wobei das Verfahren einen Schritt des Sammelns mehrerer Elementarbefehle in einem Befehlspaket (IW) umfasst, die jeder für eine jeweilige Verarbeitungseinheit (PU1-PU4, BCU, ALU0, ALU1, MAU, LSU) eines Prozessors (PRC, PRC') bestimmt sind, wobei jeder Elementarbefehl eine oder mehrere Silben (Pj[1], Pj[2]) umfasst, die jede einen Rang in dem Elementarbefehl aufweisen, **dadurch gekennzeichnet, dass** es einen Schritt der Einteilung der Silben der Elementarbefehle (Pj) in dem Befehlspaket (IW) nach Gruppen von Silben gleichen Rangs umfasst, wobei eine Gruppe (G1) von Silben ersten Rangs (Pj[1]) von allen Elementarbefehlen des Befehlspakets in das Befehlspaket eingefügt wird, das eine Gruppe (G2) von Silben zweiten Rangs (Pj[2]) von allen Elementarbefehlen des Befehlspakets aufweist, wobei die Silben in jeder Gruppe entsprechend der Verarbeitungseinheit (PU1-PU4, BCU, ALU0, ALU1, MAU, LSU) angeordnet sind, für die jede Silbe bestimmt ist.

**2.** Verfahren nach Anspruch 1, wobei die Silben (Pj[1], Pj[2]) gleichen Rangs in dem Befehlspaket (IW) derart angeordnet sind, dass eine der Verarbeitungseinheiten (PU1-PU4, BCU, ALU0, ALU1, MAU, LSU) mit der höchsten Priorität zuerst die Silbe des Elementarbefehls, der für sie bestimmt ist, empfangen kann.

**3.** Verfahren nach Anspruch 1 oder 2, wobei jede Silbe (Pj[1], Pj[2]) jedes Befehlspakets (IW) eine Endkennung (EW) umfasst, die angibt, ob die Silbe die letzte des Befehlspakets ist.

**4.** Verfahren nach einem der Ansprüche 1 bis 3, wobei jede Silbe (Pj[1], Pj[2]) jedes Befehlspakets (IW) eine Kennung der Verarbeitungseinheit (PUC0, PUC1) umfasst, die die Verarbeitungseinheit (PU1-PU4, BCU, ALU0, ALU1, MAU, LSU) angibt, an die die Silbe übertragen werden muss.

**5.** Verfahren nach einem der Ansprüche 1 bis 4, wobei jede Silbe (Pj[1], Pj[2]) jedes Befehlspakets (IW) eine Kennung (RNG), die den Rang der Silbe angibt, umfasst.

**6.** Verfahren nach einem der Ansprüche 1 bis 5, wobei jedes Befehlspaket (IW) höchstens weniger Silben (Pj[1], Pj[2]) als die Anzahl der Verarbeitungseinheiten (PU1-PU4, BCU, ALU0, ALU1, MAU, LSU) multipliziert mit der Höchstzahl der Silben pro Elementarbefehl umfasst.

**7.** Verfahren nach einem der Ansprüche 1 bis 6, wobei die Silben aller Elementarbefehle eine gleiche Länge aufweisen.

**8.** Prozessor, der Folgendes umfasst:

mehrere Verarbeitungseinheiten (PU1-PU4, BCU, ALU0, ALU1, MAU, LSU) zum parallelen Verarbeiten mehrerer Elementarbefehle, wobei die Elementarbefehle (Pj) eine oder mehrere Silben (Pj[1], Pj[2]) umfassen, die jede einen Rang in dem Elementarbefehl aufweisen, und
einen Eingangskreis (INC, INC'), der dazu ausgestaltet ist, ein Befehlspaket (IW) zu empfangen, das mehrere Elementarbefehle umfasst, und ihn an die Verarbeitungseinheiten zu übertragen,
**dadurch gekennzeichnet, dass** der Eingangskreis dazu ausgestaltet ist, an die Verarbeitungseinheiten (PU1-PU4, BCU, ALU0, ALU1, MAU, LSU) alle Silben ersten Rangs (Pj[1]) der Elementarbefehle (Pj) des Befehlspakets schneller als die Silben zweiten Rangs (Pj[2]) des Elementarbefehls des Befehlspakets (IW) zu übertragen, wobei die Silben gleichen Rangs untereinander entsprechend der Verarbeitungseinheit, für die jede Silbe bestimmt ist, angeordnet sind.

**9.** Prozessor nach Anspruch 8, bei dem die Silben (Pj[1], Pj[2]) des Befehlspakets (IW) nach Gruppen von Silben gleichen Rangs gruppiert sind, wobei die Gruppe der Silben ersten Rangs (Pj[1]) am Anfang des Befehlspakets (IW) angeordnet ist, wobei die Silben in jeder Gruppe gemäß einer Reihenfolge angeordnet sind, die den Verarbeitungseinheiten (PU1-PU4, BCU, ALU0, ALU1, MAU, LSU) zugewiesen ist.

10. Prozessor nach Anspruch 8 oder 9, bei dem der Eingangskreis (INC, INC') dazu ausgestaltet ist, an die Verarbeitungseinheiten (PU1-PU4, BCU, ALU0, ALU1, MAU, LSU) die Silben (Pj[1], Pj[2]) jeder Gruppe des Befehlspakets (IW) unter Berücksichtigung einer den Verarbeitungseinheiten zugewiesenen Reihenfolge zu übertragen.

11. Prozessor nach einem der Ansprüche 8 bis 10, wobei der Eingangskreis (INC, INC') Verzeichnisse (R21-R28, R31-39) umfasst, die vorgesehen sind, um eine jeweilige Silbe (Pj[1], Pj[2]) des Befehlspakets (IW) zu empfangen, wobei die Anzahl der Verzeichnisse höchstens gleich der Anzahl de Verarbeitungseinheiten (PU1-PU4, BCU, ALU0, ALU1, MAU, LSU) des Prozessors (PRC, PRC') multipliziert mit einer Höchstzahl von Silben je Elementarbefehl (Pj) ist.

12. Prozessor nach einem der Ansprüche 8 bis 11, wobei die Anzahl der Verzeichnisse (R31-R38) geringer als die Anzahl der Verarbeitungseinheiten (BCU, ALU0, ALU1, MAU, LSU) des Prozessors (PRC') multipliziert mit einer Höchstzahl von Silben je Elementarbefehl (Pj) ist.

13. Prozessor nach einem der Ansprüche 8 bis 12, wobei jede Silbe (Pj[1], Pj[2]) jedes Befehlspakets (IW) eine Endkennung (EW) umfasst, die angibt, ob die Silbe die letzte des Befehlspakets ist.

14. Prozessor nach einem der Ansprüche 8 bis 13, wobei jede Silbe (Pj[1], Pj[2]) jedes Befehlspakets (IW) eine Kennung der Verarbeitungseinheit (PUC0, PUC1) umfasst, die die Verarbeitungseinheit (PU1-PU4, BCU, ALU0, ALU1, MAU, LSU) angibt, an die die Silbe übertragen werden muss.

15. Prozessor nach einem der Ansprüche 8 bis 14, wobei jede Silbe (Pj[1], Pj[2]) jedes Befehlspaketes (IW) eine Kennung (RNG) umfasst, die den Rang der Silbe angibt.

**Claims**

1. A method of compiling a program for a processor having multiple processing units capable of executing instruction bundles having several elementary instructions (Pj), the method comprising a gathering step in an instruction bundle (IW) of multiple elementary instructions each targeting a respective processing unit (PU1-PU4, BCU, ALU0, ALU1, MAU, LSU) of the processor (PRC, PRC'), each elementary instruction including one or more syllables (Pj[1], PJ[2]) each having a rank in the elementary instruction,

   • **characterized in that** it comprises a step of allocating syllables of the elementary instructions (Pj) in the instruction bundle (IW) by groups of syllables of same rank, a group (G1) of syllables of first rank (Pj[1]) of all elementary instructions of the instruction bundle being inserted in the instruction bundle before a group (G2) of syllables of second rank (Pj[2]) of all the elementary instructions of the instruction bundle, the syllables in each group being ordered according to the target processing unit (PU1-PU4, BCU, ALU0, ALU1, MAU, LSU) of each syllable.

2. The method of claim 1, wherein the syllables (Pj[1], Pj[2]) of same rank are ordered in the instruction bundle (IW) so that a high priority processing unit (PU1-PU4, BCU, ALU0, ALU1, MAU, LSU) receives first its respective elementary instruction syllable.

3. The method of claim 1 or 2, wherein each syllable (Pj[1], Pj[2]) of each instruction bundle (IW) includes an end code (EW) indicating whether the syllable is the last in the instruction bundle.

4. The method according to one of claims 1 to 3, wherein each syllable (Pj[1], Pj[2]) of each instruction bundle (IW) includes a processing unit code (PUC0, PUC1) indicating the processing unit (PU1-PU4, BCU, ALU0, ALU1, MAU, LSU) to which the syllable is to be transmitted.

5. The method according to one of claims 1 to 4, wherein each syllable (Pj[1], Pj[2]) of each instruction bundle (IW) includes a code (RNG) indicating the rank of the syllable.

6. The method according to one of claims 1 to 5, wherein each instruction bundle (IW) includes less syllables (Pj 1], Pj[2]) than the number of processing units (PU1-PU4, BCU, ALU0, ALU1, MAU, LSU) times the maximum number of syllables per elementary instruction.

7. The method according to one of claims 1 to 6, wherein the syllables of all elementary instructions have the same length.

8. A processor comprising:

   • multiple processing units (PU1-PU4, BCU, ALU0, ALU1, MAU, LSU) for processing multiple elementary instructions in parallel, the elementary instructions (Pj) including one or more syllables (Pj[1], Pj[2]), each having a rank in the elementary instruction, and
   • an input circuit (INC, INC') configured to receive an instruction bundle (IW) including multiple elementary instructions, and to transmit it to the processing units,
   • **characterized in that** the input circuit is configured to transmit to the processing units (PU1-PU4, BCU, ALU0, ALU1, MAU, LSU) all syllables of first rank (Pj[1]) of the elementary instructions (Pj) of the instruction bundle faster than syllables of second rank (Pj[2]) of the elementary instructions of the instruction bundle (IW), the syllables of same rank being ordered according to the target processing unit of each syllable.

9. The processor of claim 8 wherein the syllables (Pj[1], Pj[2]) of the instruction bundle (IW) are distributed in groups of syllables of same rank, a group of syllables of first rank (Pj[1]) being placed at the beginning of the instruction bundle (IW), wherein the syllables in each group are ordered in an order assigned to the processing units (PU1-PU4, BCU, ALU0, ALU1, MAU, LSU).

10. The processor according to claim 8 or 9, wherein the input circuit (INC, INC') is configured to transmit to the processing units (PU1-PU4, BCU, ALU0, ALU1, MAU, LSU) the syllables (Pj[1] Pj[2]) of each group of the instruction bundle (IW), respecting the order assigned to the processing units.

11. The processor according to one of claims 8 to 10, wherein the input circuit (INC, INC') includes registers (R21-R28, R31-R39) configured for receiving each a respective syllable (Pj[1], Pj[2]) of the instruction bundle (IW), the number of registers being at most equal to the number of processing units (PU1-PU4, BCU, ALU0, ALU1, MAU, LSU) of the processor (PRC, PRC') times a maximum number of syllables per elementary instruction (Pj).

12. The processor according to one of claims 8 to 11, wherein the number of registers (R31-R38) is less than the number of processing units (BCU, ALU0, ALU1, MAU, LSU) of the processor (PRC') times a maximum number of syllables per elementary instruction (Pj).

13. The processor according to one of claims 8 to 12, wherein each syllable (Pj[1], Pj[2]) of each instruction bundle (IW) includes an end code (EW) indicating whether the syllable is the last in the instruction bundle.

14. The processor according to one of claims 8 to 13, wherein each syllable (Pj[1], Pj[2]) of each instruction bundle (IW) includes a processing unit code (PUC0, PUC1) indicating the processing unit (PU1-PU4, BCU, ALU0, ALU1, MAU, LSU) to which the syllable is to be transmitted.

15. The processor according to one of claims 8 to 14, wherein each syllable (Pj[1], Pj[2]) of each instruction bundle (IW) includes a code (RNG) indicating the rank of the syllable.

INC1

R01
R11
R02
R12
R03
R13
R04
R14

PU1

PU2

PU3

PU4

Fig. 1
Art Antérieur

Fig. 2

Art Antérieur

Fig. 3
Art Antérieur

Fig. 4
Art Antérieur

Fig. 5

Fig. 6

| Pj[1] | ITO | | PUC0 | EW |
|---|---|---|---|---|
| Pj[2] | IT1 | PUC1 | 0 | EW |

Fig. 7

| Pj[i] | IT | RNG | PUC | EW | **Fig. 8** |

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 10301323